Europäisches Patentamt

European Patent Office

Office européen des brevets

(11) Publication number: **0 032 444**
**B1**

## EUROPEAN PATENT SPECIFICATION

(45) Date of publication of patent specification: 25.07.84

(51) Int. Cl.³: **F 16 B 5/02**

(21) Application number: **81300096.5**

(22) Date of filing: **09.01.81**

(54) Sealing capped nut and bolt therefor.

(30) Priority: **10.01.80 US 111038**

(43) Date of publication of application:
**22.07.81 Bulletin 81/29**

(45) Publication of the grant of the patent:
**25.07.84 Bulletin 84/30**

(84) Designated Contracting States:
**BE CH DE FR GB IT LI SE**

(56) References cited:
**DD - A - 139 624**
**DE - A - 2 700 665**
**FR - A - 2 329 887**

(73) Proprietor: **Russell, Burdsall & Ward Corporation**
**8100 Tyler Blvd.**
**Mentor Ohio 44060 (US)**

(72) Inventor: **Rebish, Edward J.**
**1804 Glenridge Road**
**Euclid Ohio 44117 (US)**

(74) Representative: **Oliver, Roy Edward et al,**
**POLLAK MERCER & TENCH High Holborn House**
**52-54 High Holborn**
**London WC1V 6RY (GB)**

Courier Press, Leamington Spa, England.

## Description

Field of the Invention

The present invention relates generally to fastening system for securing apertured members together in a secure and sealed condition by means of sealing capped nut and a bolt therefor to receive a portion of a formable hollow shank on the capped nut for formation of a seal under the bolt head. More particularly the present disclosure relates to an improved method for the fastening of apertured members made of fiberglass reinforced polyester/ plywood laminates to the structural members for transportation equipment such as intermodal cargo containers and truck trailers for over the highway use by means of the use of a sealing capped nut having a formable hollow shank thereon to sealingly engage the bolt and the apertured members in secured engagement.

Description of the Prior Art

All metal intermodal cargo containers and truck trailers such as the all aluminum example thereof have been utilized in industry for a long period of time. The cost of these containers and trailers has risen substantially due to the cost of the raw materials and the methods of manufacturing the finished product such that the use of fiberglass reinforced polyester/plywood is now being used to reduce costs and is experiencing rapid growth for the construction of such containers due to the lesser cost and improved characteristics such as structural integrity and aesthetic appearance. The use of these materials began some time in the late 1960's and early 1970's by truck trailer manufacturers who were experimenting with the material which today has achieved approximately 9—14% penetration of the marketplace for the use of such materials in truck trailers and truck bodies. These FRP/ plywood materials generally consist of a layer of plywood sandwiched between two layers of reinforced plastic material. The plastic material can be of any polymeric substance but most often has been of the polyester type being reinforced with glass fibers. The plastic is bonded by heat and pressure to the plywood core and the composite material combines the flexibility of plywood with the stiffness of fiberglass reinforced plastic to provide a material which is light weight and durable. This allows for the use of fewer structural members while providing good design aerodynamics and aesthetically pleasing exterior surface. Perhaps chief among the advantages of such material is the ease of repair of any damaged areas and its resistance to puncture.

The method of construction of containers and trailers of these materials is similar to that utilized in the construction of all metal containers or trailers. The problem with such FRP/ plywood panels is that with apertures being drilled therethrough for the fastening of these panels to steel frames as in cargo containers or the extruded aluminum frames as in truck trailers, the exposure of the plywood core to the environment can cause problems with adhesive strength of the materials which have been laminated and with swelling and general deterioration of the plywood core. The typical 20' containers for instance require approximately 400 fasteners while a typical 44' trailer requires generally about 600 fasteners to fasten the panels to the structural members. A mastic sealant is usually brushed on between the panels and the frame to help in sealing out moisture.

The requirement for a fastening system to achieve the fastening of these panels to their structural members are unusual since the plastic overcoats are brittle in nature while the core of plywood is highly compressible causing problems if the fasteners are overloaded and yet the fasteners must be loaded sufficiently to properly fasten the panels to their structural members. Furthermore, it is highly desirable to have the nut heads and bolt heads display a low profile on the exterior portions thereof to avoid hitting them in the use of these containers or trailers and to maximize the usable interior width and height of the container or trailer. In the past several fastening systems have been utilized which are of the nut and bolt type to generally fill the apertures drilled therethrough to provide a sealing engagement to obtain a moisture free internal bore on the materials.

One commonly used fastening system in this industry for fastening apertured panels of the FRP/plywood to the structural members for the production of cargo containers or tractor trailers consists of a sleeve which is inserted completely through the bore of the panels and the structural members which is inserted from the plywood side having a flange head which fits flushly over the plywood surface. Thereafter a pin is inserted through the opposite side of the sleeve and subsequently an installation tool is applied to the pin tail and actuated to pull the pin into contact with the joint member and causing the sleeve end to curl and lock into the formed pin head such as the action of a blind or pop rivet utilized for the connection of metallic panels. The installation tool thereafter breaks the pin in tension with a break point groove substantially flush with the head of the sleeve so that there is no projecting pin left to be cut off in a separate operation.

Another type of fastening system employs a bolt member generally having a gripping material on the threads adapted for engagement with a specially constructed tapped through nut member to achieve the desired clamping action between the frame and the panel sections The bolt member includes an anti-rotation means which also achieves a centering of the threaded portion of the bolt relative to the panel apertures and is provided with a sealing element under the head. The nut member is engaged from the other side which has a drive means and tapped through hole. Upon clamping engagement with the bolt, the sealing element provides protection against entry of moisture into the threaded portion of the assembly.

The first system mentioned above includes a significant disadvantage in terms of waste material consisting of the throw away shank which is snapped off from the installed fastener. Furthermore with this rather open flush mount side, moisture can enter into the cracks between the bolt and the sleeve member promoting oxidation of the fastener which can cause loosening of the fastener. This allows moisture to seep into the core of the aperture bore resulting in swelling or deterioration of the plywood core. Furthermore there is an inability to adjust or replace these fasteners conveniently.

A major problem and disadvantage of the second system mentioned above is the weight when up to 600 of these fasteners are used on each unit of production. Furthermore by using a sealing collar on the bolt member of these fastener systems there is no assurance of the integrity of the seal through the entire bore diameter of the apertures thus causing a possible leak in the moisture proofing of these bore diameters. Furthermore since these components are all metallic in nature given the fact that different metallic materials are used with regard to the frame members for the structural support of the panels, electrolytic actions result causing rapid oxidation of one of the members of the fastening system or the frames of the containers. This is highly undesirable aesthetically and could mean replacement of these members sooner than the wear life of the panels and the frame structures. The replacement of corroded components is difficult.

A further disadvantage of the second system is the cost of manufacture since separate operations are required to manufacture the sealing element, the bolt, the nut, the installation of the sealing element on the bolt, and the thread gripping media on the bolt. Because it is hard to control the exact amount of thread gripping media, the torque to tension relationship can vary. When loosening of the fastener damages the thread gripping media, the torque to clamp force relationship can be destroyed.

Yet another known form of panel fastening system is disclosed in DE—AI—2 700 665, wherein a pair of fastening members have corresponding interfitting means which are operable, when the members are assembled, to secure the members together, and have respective clamping faces which are cooperable with associated opposed surfaces of the panels to engage and clamp thereagainst when the members are operably secured together by said interfitting means, one of the members having a reduced diameter shank, which extends from its clamping face, is proportioned to extend into in-register apertures in the panels and has a tubular end, and sealing means locatable between the other member and the adjacent surface of the panels to provide a seal around the in-register apertures at said adjacent surface, when the members are assembled and secured together by said interfitting means.

One disadvantage associated with this known fastening system is that the sealing means is in the form of a prefabricated element, such as, a ring seal, separate from the two fastening members prior to assembly. Thus, manufacturing costs are increased by having to make three components, namely, the pair of fastening members and the sealing element, for the assembly and the use of such a separate sealing element does not always provide a fully reliable sealing of the panel apertures.

Therefore, it would be exceedingly advantageous in terms of reducing manufacturing costs, maintenance problems, weight and providing extended life to the use of panels for the construction of cargo containers and tractor trailers to have a fastening system which will effectively seal, fasten and solve the problems attendant to the use of such fastening devices for the fastening situation as hereinbefore described.

Accordingly, objects of the present invention are to provide a fastening assembly which: is light weight and simple to manufacture on a volume basis; will provide a complete sealing of the bore diameter of the apertures of the panel and frame structures so as to provide a moisture free internal bore where the plywood exists; will avoid the rapid oxidation due to the electrolytic effect of various metals touching one another; and will securely fasten the FRP/plywood panels to structural members, while providing an aesthetically pleasing appearance.

These and other objects of the present invention are achieved by providing a fastener assembly, for fastening and sealing together articles with respective apertures with one another, comprising a pair of members having corresponding interfitting means which are operable, when the members are assembled, to secure the members together and having respective clamping faces which are cooperable with associated opposed surfaces of the articles to engage and clamp thereagainst when the members are operably secured together by said interfitting means, one of the members having a reduced diameter shank, which extends from its clamping face and has a tubular end, and sealing means locatable between the clamping face of the other member and the adjacent surface of the articles to provide a seal around the in-register apertures at said adjacent surface, when the members are assembled and secured together by said interfitting means, characterised in

that the tubular end of the shank is of a deformable material,

that the clamping face of the other member has hem-forming means operable, when the members are assembled, to radially deform the tubular end of the shank and produce a radially-extending, peripherally continuous hem which engages the adjacent surface of the articles around the apertures and is clamped into sealing engagement therewith by the clamping face of the other member to provide said seal, and

that said one member is operable to produce a seal with the respective adjacent surface of the articles around the apertures and in cooperation with the shank and hem, when formed on assembly of the members, to fully seal the apertures.

Other advantages of the invention over existing and prior art forms will become apparent to those skilled in the art from the following description and accompanying drawings.

FIGURE 1 is a side section view of a sealing capped nut and bolt therefor according to one embodiment of the present invention.

FIGURE 2 is a side section view of a sealing capped nut and bolt therefor according to another embodiment of the present invention.

FIGURE 3 is a side section view of a sealing capped nut and a countersunk bolt therefor according to another embodiment of the present invention.

FIGURE 3a is an enlarged section taken from FIGURE 3 as indicated.

FIGURE 4 is a partial side section view of a sealing capped nut.

FIGURE 5 is a side section view of a sealing capped nut and bolt therefor according to another embodiment of the present invention.

FIGURE 6 is a side section view of a sealing capped nut and bolt therefor according to another embodiment of the present invention.

FIGURE 7 is a side section view of a sealing capped nut and bolt therefor according to another embodiment of the present invention.

FIGURE 8 is a side section view of a sealing capped nut and bolt therefor according to another embodiment of the present invention.

FIGURE 9 is a side section view of a sealing capped nut and bolt therefor just prior to engagement therebetween.

FIGURE 10 is a side section view of a sealing capped nut and bolt therefor partially engaged showing the forming of the seal.

FIGURE 11 is a side elevation view in partial section showing an internal drive means on a bolt segment.

FIGURE 12 is a top plan view of the internal drive means shown in FIGURE 11.

Description of the Preferred Embodiments

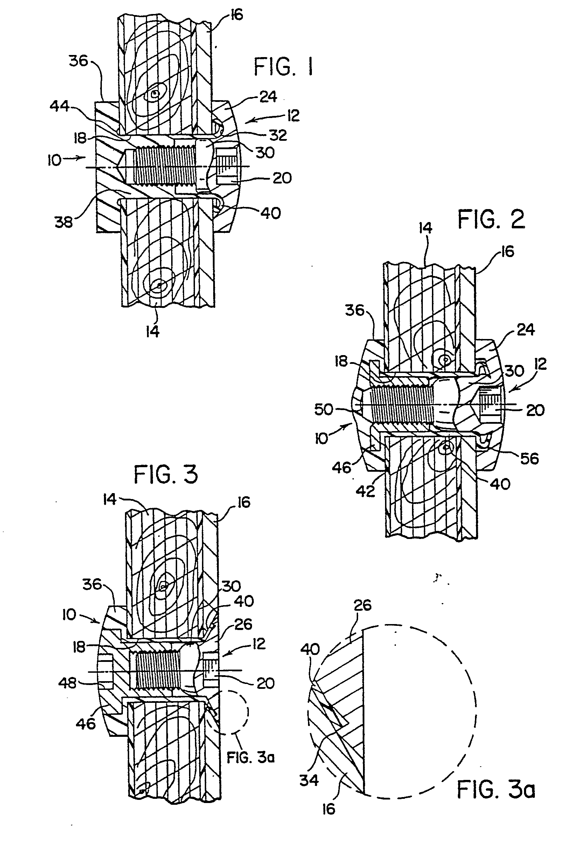

Referring particularly to FIGURE 1 of the drawings it can be amply seen that the fastening system of the subject invention generally consists of two members, the sealing capped nut 10 and a bolt 12 therefor. The sealing capped nut 10 and accompanying bolt 12 can be utilized as shown in the FIGURES of the drawings to fasten apertured members such as a fiberglass reinforced polyester/plywood panel 14 to a metallic structural member 16. Each of the structural and panel members 16 and 14 have apertures 18 therethrough of a like size bore diameter so that upon proper alignment, the sealing capped nut 10 and bolt 12 can sealingly fasten the members together. The bolt 12 will generally be metallic in nature and may be made from materials such as aluminum, iron, steel or the like in accordance with standard specifications of conventional manufacture familiar to those skilled in the art.

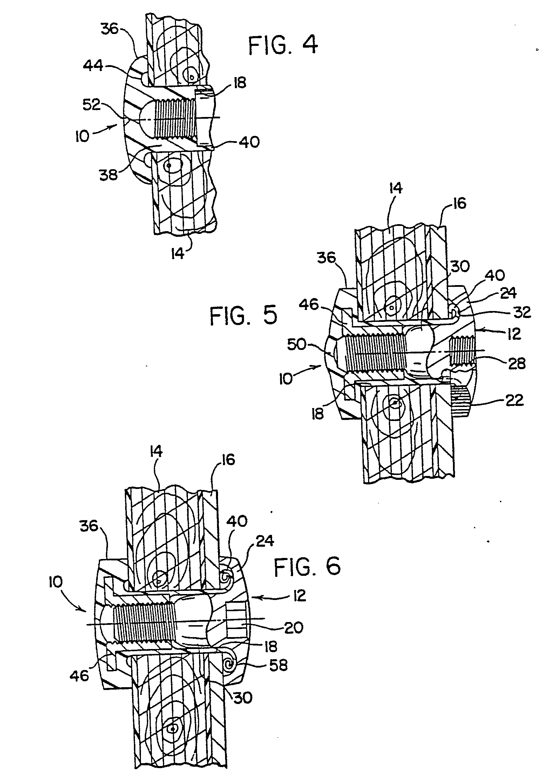

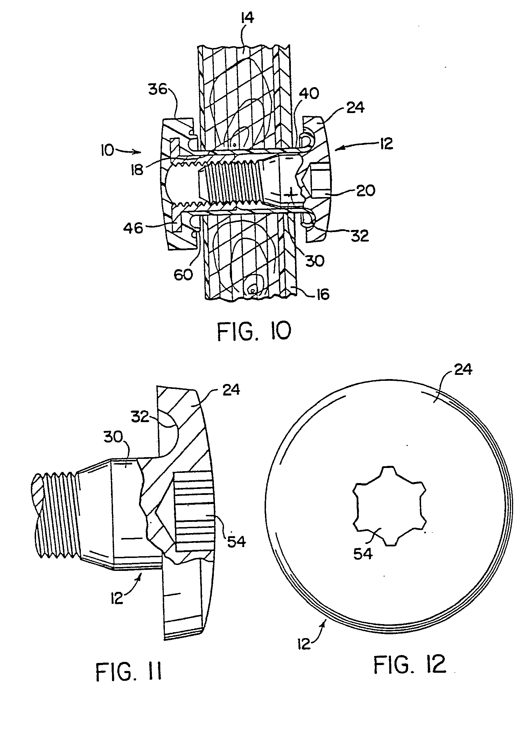

The drive means on the bolt can either be an internal hex 20 as indicated in the FIGURES, an external hex 22 as seen in FIGURE 5 or any of a number of other standard drive configurations or anti-theft drive configurations as those skilled in the art will readily realize are suitable for such driver means. An internal drive means such as internal hex 20 on the special internal drive means seen 54 in FIGURES 11 and 12 are preferred from the standpoint that a lower form of head 24 of bolt 12 can be utilized so as to maximize the interior space of the cargo container or trailer assembled in this fashion. A method of maximizing such internal space would be to utilize a spray head 26 on bolt 12 and countersink same into the structural member 16 to achieve a flush mounting as seen in FIGURE 3. The bolt head 24 may also conveniently be used as a hold down point by a having a tapped center 28 as seen in FIGURE 5, to receive the external threads for engagement of various hold down instrumentalities such as a hook, eye or the like to which straps or ropes can be fastened to anchor the cargo into the interior of the container or trailer. As will occur to those skilled in the art, this may be accomplished on bolts 12 having heads 24 with either an external or internal drive means. Where internal drive means are used, the tapped center 28 will be deeper and of slightly smaller diameter than the internal drive means.

The bolt 12 preferably has a shoulder portion 30 along the shank of the bolt 12 nearest the bolt head 24 to receive and engage the sealing capped nut 10 to serve as a pilot diameter to assure proper alignment of the bolt 12 into the sealing capped nut 10 upon insertion. The bolt 12 shoulder portion 30 will have a diameter large enough to engage the sealing capped nut 10 against the bore diameter of the apertures. 18 This engagement between the shoulder portion 30, the sealing capped nut 10 and the bore diameter of apertures 18 will also serve to protect the FRP/plywood panels 14 from the environmental elements which tend to swell or otherwise destroy the FRP/plywood panels 14 while in use on a trailer or container.

The bolt 12 at the intersection of the bolt head 24 and the shoulder portion 30 of the shank may be designed to further engage the portion of the sealing capped nut 10 so as to either cause a hemming of a portion of the material of the sealing capped nut 10 as by a sharp radius annular recess 32 in accordance with FIGURES 1, 5, 7, 8, 9 and 10 of the drawings. A shallow radius may spread a portion of the material of the sealing capped nut 10 so as to cause a sealing engagement as amply seen in FIGURE 3 is well suited for a spreading of the portion of the material of the sealing capped nut 10 so as to cause a seal upon the countersink bore of the bolt 12. Furthermore such a spray head 26 on a bolt 12 may have an annular cutoff 34 so as to trim a portion of the material of the sealing capped nut 10 so as to assure a complete sealing engagement with the FRP/plywood panel 14 and the metallic structural members 16. An annular channel 56 may be used to reverse hem the sealing capped nut 10 as seen in FIGURE 2 or a roll form radius 58 may be used to roll a portion of the sealing capped nut 10 as seen in FIGURE 6. As seen in the drawings the sealing capped nut 10 is made for engagement with bolt 12 to sealingly fasten the FRP/plywood panel 14 to the metallic structural members 16 as by the clamp force of such threaded engagement between the bolt 12 and the sealing capped nut 10.

The sealing capped nut 10 may be conveniently made by many conventional molding techniques of a polymeric material which is capable of allowing threaded engagement with the bolt 12 to accomplish the clamp force necessary to fasten the FRP/plywood 14 to the metallic structural member 16. Examples of such polymeric materials which are thought to be suitable for use of such a sealing capped nut 10 would include: acrylonitrile-butadienestyrene terpolymers, acetals, acrylics, cellulosics, fluoroplastics, nylons, phenylene oxides, polyaryl ethers, polyaryl sulfones, polycarbonates, polyesters, polyethylenes, polyphenylene sulfides, polypropylenes, polystyrenes, polysulfones, polyvinyl chlorides, urethanes, styrene-acrylonitrile copolymers and various reinforced materials such as styrenic materials with as much as 40% fiberglass loading, polyolefins with up to 40% glass fiber loading, polysulfones and polycarbonates with up to 50% reinforcing material loading, nylons and acetals with 60% reinforced loading, polyurethanes with up to 40% glass fiber loading, thermoplastic polyesters with up to 40% glass fiber loading, polypheylene sulfides with up to 50% fiberglass loading, and various other materials as would occur to those skilled in the art for use in the subject invention.

Furthermore, soft or formable metals thought to be suitable for the sealing capped nut 10 include, aluminum, low carbon steel, copper, brass, bronze and other alloys as may occur to those skilled in the art.

The sealing capped nut 10 in addition to having a nut head portion 36 has a flexible hollow shank consisting of a thick wall shank 38 nearest the head portion 36 and a thin wall shank 40 for sealing engagement with the bolt 12. The thick wall shank 38 is utilized for threaded engagement with the bolt 12. The thick wall shank 38 is utilized for threaded engagement with the bolt to provide the clamp force necessary for the fastening of the FRP/plywood panels 14 to the metallic structural members 16. The polymeric substance may be molded so as to provide two starting threads in the thick wall shank 38 and allowing the bolt 12 to thereafter form the threads in the thick wall shank 38 as by engaging the bolt 12 therein. The bolt 12 may also have a self-tapping type thread design well known to those skilled in the art to complete the thread engagement with the sealing capped nut 10.

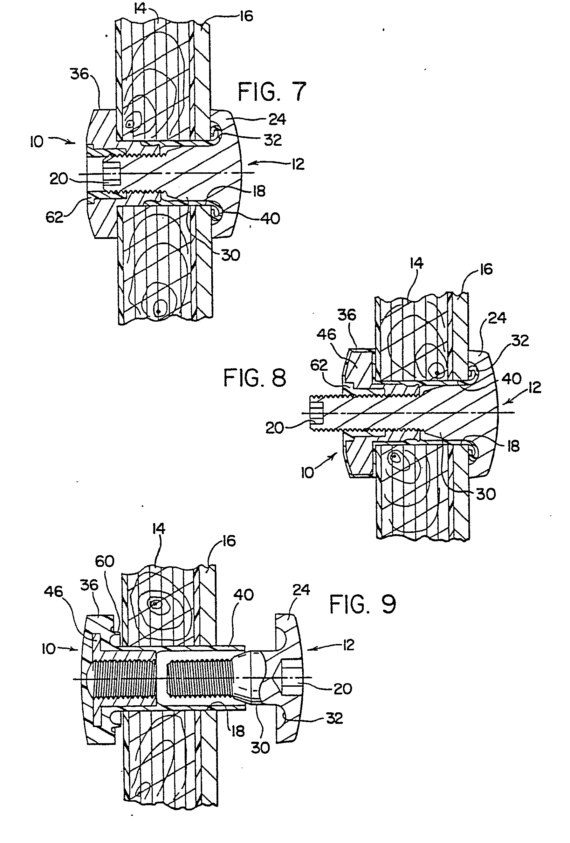

As the bolt 12 is engaged into the thick wall shank 38 of the sealing capped nut 10, the thin wall shank 40 of the sealing capped nut 10 is engaged upon the shoulder portion 30 of the bolt 12. As seen in FIGURE 9, a sealing capped nut 10 is made of a shank length slightly in excess of the total thickness of the materials to be clamped together so as to provide a slight excess of material in the thin wall shank 40 of the sealing capped nut 10 in which to engage and be hemmed underneath the bolt head 24 as seen in the drawings or to be spread and cut off as seen in FIGURE 3 of the drawings. FIGURE 10 illustrates how the hemming of the thin wall portion 40 if the sealing capped nut 10 occurs prior to full engagement of bolt 12 into sealing capped nut 10. Once the bolt 12 has been engaged, the thin wall shank portion 40 of the sealing capped nut 10 should have such memory as to remain in its hemmed or sprayed position so that the bolt 12 may be replaced with another bolt of similar design without disengagement of the sealing capped nut 10. This way the sealing capped nut 10 with its thick and thin shank portions 38 and 40 will sealingly engage the bore diameter of the apertures 18 even though the bolt 12 is removed.

The nut head 36 may be formed of a number of convenient and aesthetically pleasing forms as by internal or external drive means on the face thereof or as a button type face as seen in FIGURE 4 of the drawings. The main consideration involved in the nut head 36 is that it seal properly and completely the aperture 18 in the fiberglass reinforced polyester/plywood panel 14. This can be accomplished by having a flat bearing surface 42 as seen in FIGURE 2, an annular recess 44 as amply seen in FIGURES 1 and 4, an annular skirt 60 as seen in FIGURES 9 and 10 of the drawings and numerous other configurations as will occur to those skilled in the art and be suitable for providing a sealing engagement of the nut head 36 against the fiberglass reinforced polyester/plywood panel 14.

In all of the sealing capped nuts 10 the shank portion will be of the polymeric material and particularly the thin wall shank 40 must be a formable hollow nature so as to allow expansion and hemming of the material underneath the sharp radius annular recess 32 of the bolt 12 as seen in FIGURES 1, 2, 5, 6, 7, 8 and 9 or the spreading and flattening of the thin wall shank 40 under the spray head 26 of the bolt 12 as seen in FIGURE 3. In the all polymeric material sealing capped nut 10, the thick wall portion 38 can have molded therein at least a couple of starting threads to receive in threaded engagement the bolt 12 or may have fully formed threads through the length of the thick wall shank 38 for receiving the bolt 12 in threaded engagement.

To further strengthen the sealing capped nut 10, an engagement insert 46 may be molded into the sealing capped nut 10 to provide an additional reinforcement of the sealing capped nut 10 structure. The engagement insert 46 may be of a metallic nature such as alumimum, iron, steel or the like. Furthermore the use of such engagement insert 46 will allow the use of either a coarse thread on the bolt 12 or a fine thread on the bolt 12 for tight and secure engagement of the sealing capped nut 10. A preferred example of such a mold in-place engagement insert 46 can be seen in FIGURES 2 and 5 of the drawings. Furthermore as seen in FIGURE 3 of the drawings, engagement insert 46 may be inserted through the nut head 36 so as to provide an ample fixture for receiving either an internal drive means 48 as shown in FIGURE 3 or a tapped center similar to tapped center 28 in FIGURE 5 for receiving threaded eyes or the like for tying down the cargo to the container or fastening the container.

As seen in FIGURE 7 the bolt 12 can be a button head 24 of a tamper proof design and the sealing capped nut 10 may be metallic having an internal drive means with a seal insert 62 and a thin wall portion 40 to allow driving the bolt 12 by its internal drive means 20 in the threaded end of bolt 12.

Another embodiment may be seen in FIGURE 8 where the engagement insert 46 is molded into a thin section of polymeric material to form a seal insert 62 and the thin wall portion 40 in one operation on an external drive means sealing capped nut 10. By using a bolt 12 having an internal drive means 20 in the threaded end of a length in excess of that needed, the bolt 12 may be fully engaged to leave a threaded portion exposed as seen in FIGURE 8. The extra length may be used for a further locking nut for extra security in critical applications or as a convenient point to attach hardware to for numerous applications. Alternatively, the threaded portion of bolt 12 could have a break away portion such as that seen in U.S. patent No. 4,138,921, hereby incorporated by reference. With such a break away portion, the bolt 12 can not thereafter be readily removed thus providing a security feature.

Since in the application of fiberglass reinforced polyester/plywood panels 14 to metallic structural members 16 for the construction of cargo containers or trailers for over the highway use requires many bolts 12 and sealing capped nuts 10, a tightness bulbous 50 is a convenient way to check the tightness of these bolts 12 without much effort on the part of the inspector. Such a tightness bulbous 50 as seen in FIGURES 2 and 5 of the drawings can be either molded into the all polymeric form of the sealing capped nut 10 or conveniently formed with the engagement insert 46 in place. The slight bulging of the nut head portion 36 will visually indicate that the bolt 12 is fully engaged in the sealing capped nut 10.

For application where it is anticipated that replacement of the sealing capped nuts 10 may be desirable or necessary, a drill out dimple 52 can be molded into the center top of the sealing capped nut 10 to provide a quick and ready indexing point for a drill bit to conveniently drill out the sealing capped nut when desired. It is anticipated that with the all polymeric sealing capped nut 10 that a drill bit the size of the aperture 18 bore diameter could be used to quickly and easily drill out any sealing capped nuts 10 as desired.

It can be seen that a sealing capped nut 10 according to the precepts of the present invention will accomplish a complete sealing of the outermost portion of a fiberglass reinforced polyester/plywood panel 14 as attaching it to a metallic structural member 16. Furthermore the sealing capped nut 10 can be colored as by conventional coloring of plastic materials upon injection molding or other form of molding same so as to achieve color coding or aesthetic appearance as dessired upon the outside of such FRP/plywood panels 14. This accomplishes a sealing and aesthetically pleasing appearance which is a significant improvement over that of the prior art. Furthermore the use of a plastic or polymeric substance for the manufacture of the sealing capped nut 10 will achieve an insulation against electronic or electrical current flow thus reducing to zero the prospect of electrolytic reaction between the sealing capped nut 10 and the metal structural members 16. This will significantly reduce the prospect of rapid oxidative destruction of the bolt 12.

Additionally it is expected that the use of a polymeric material for the construction of sealing capped nuts 10 will significantly reduce the weight added to a cargo container or a tractor trailer by the virtue of the approximately 600 of these units utilized to fasten the fiberglass reinforced polyester/plywood panels 14 to the metallic structural members 16 of the unit. Furthermore the sealing capped nut 10 could also be cast with axially disposed ribs on the thick wall shank portion 38 for anti-rotation of the sealing capped nut 10 such that the sealing capped nuts 10 may be inserted from one side and tightened down from the other side with bolts 12 so as to accomplish a one-man installation system for fastening the FRP/plywood panels 14 to the metallic structural members 16. This would significantly reduce the labor involved in assembling cargo containers or tractor trailers.

It is also anticipated that sealing capped nut 10 can be molded with a bellows like expansion joint to be contained within the area of the thin wall shank 40 of the sealing capped nut 10 to achieve a standard production size of sealing capped nut 10 which will accommodate panels 14 and metallic structural members 16 of slightly varying thicknesses in a uniform manner to assure complete sealing of the apertures 18 in the FRP/plywood panels 14 and metallic structural members 16. In terms of repairing a specific fastener according to the precepts of the prevent invention, a single installer could remove a bolt 12 from a sealing capped nut 10 while retaining the sealing capped nut 10 in place since the hem portion of the thin wall shank 40 would retain the sealing capped nut 10 in place. This allows an installer to simply remove one bolt 12 to be replaced with another bolt 12 if desired. Furthermore it is is desired to remove the sealing capped nut 10, the hemmed portion of the thin wall shank 40 could be simply cut off the sealing capped nut 10 by means of a knife or razor blade and utilizing a drift pin or punch to thereafter punch out the sealing capped nut 10 in a simple mode of repair for a damaged sealing capped nut 10. It is anticipated that this form of cold formed memory of the thin wall shank 40 polymeric material will allow simplified and quick repair of any given damaged bolt 12 or damaged sealing capped nut 10 thus significantly reducing the cost in maintaining the cargo containers or tractor trailers in a state of total repair.

Thus, it should be apparent to those skilled in the art from the foregoing description of the preferred embodiments, that the sealing capped nut and bolt method of fastening fiberglass reinforced polyester/plywood panels to metallic structural members herein shown and described, accomplishes the objects of the invention and solves problems attendant to such fasteners in these fastening situations.

**Claims**

1. A fasterner assembly, for fastening and sealing together articles (14, 16) with respective apertures (18) with one another, comprising a pair of members (10, 12) having corresponding interfitting means which are operable, when the members (10, 12) are assembled, to secure the members (10, 12) together and having respective clamping faces which are cooperable with associated opposed surfaces of the articles (14, 16) to engage and clamp thereagainst when the members (10, 12) are operably secured together by said interfitting means, one (10) of the members having a reduced diameter shank (38), which extends from its clamping face apertures (18) and has a tubular end (40), and sealing means locatable between the clamping face of the other member (12) and the adjacent surface of the articles (14) to provide a seal around the in-register apertures (18) at said adjacent surface, when the members (10, 12) are assembled and secured together by said interfitting means, characterised in

that the tubular end (40) of the shank is of a deformable material,

that the clamping face of the other (12) member has hem-forming means (32) operable, when the members (10, 12) are assembled, to radially deform the tubular end (40) of the shank (38) and produce a radially-extending, peripherally continuous hem which engages the adjacent surface of the articles (14) around the apertures (18) and is clamped into sealing engagement therewith by the clamping face of the other (12) member to provide said seal, and

that said one member (10) is operable to produce a seal with the respective adjacent surface of the articles (14) around the apertures (18) and in cooperation with the shank (38) and hem, when formed on assembly of the members (10, 12), to fully seal the apertures (18).

2. A fasterner assembly according to claim 1, wherein said interfitting means comprises threads operable, during assembly of the members (10, 12), to move the clamping faces towards each other and to cause the hem to be formed by said hem-forming means (32).

3. A fastener assembly according to claim 2, wherein said one member (10) is a nut with a female thread and said other member (12) is a bolt with a male thread operable to mate with the female thread.

4. A fastener assembly according to claim 2, wherein said one member (10) is a bolt with a male thread and said other member (12) is a nut with a female thread.

5. A fastener assembly according to claim 2, wherein said one member (10) comprises a metallic threaded member encased within a polymeric material, the tubular end (40) being provided by the polymeric material.

6. A fastener assembly according to claim 2, 3, 4 or 5, wherein the reduced diameter shank (38) is shaped and sized to fit the apertures (18) to prevent rotation of said one member (10), when the members (10, 12) are threadedly assembled together and on rotation of said other member (12).

7. A fastener assembly according to any preceding claim, wherein said hem-forming means (32) includes a recess in the respective clamping face for engaging the tubular end (40) and for folding over adjacent portions of the deformable material of the tubular end (40), to form the hem which is received in the recess.

8. A fastener according to any of claims 1 to 6, wherein said hem-forming means comprises an annular recess in the clamping face of said other member (12), which recess is operable, during assembly of the members, to engage the tubular end (40) and to radially deform the end (40) to form the hem.

9. A fastener assembly according to claim 8, wherein the annular recess has a radius of a size sufficient to cause a rolled hem to be formed.

10. A fastener assembly according to claim 3 or any of claims 6 to 9, when dependent upon claim 3, wherein the bolt (12), which constitutes said other member (12), includes a bolt head (24) having internal drive means (20) and an annular recess providing said hem-forming means (32), the nut, which constitutes said one member (10), is a sealing capped nut made of a polymeric material and includes a metallic, engagement insert (46) for threadedly engaging the bolt (12), and the tubular end (40) of said one member (10) is a thin wall, tubular shank portion of the sealing capped nut.

11. A fastener assembly according to claim 10, wherein the bolt shank provides a broadened portion near the bolt head (24), the thin wall shank portion engaging the broadened portion to form the hem within the annular recess.

12. A fastener assembly according to claim 10 or 11, wherein the bolt (12) also has a tapped centre (28) for receiving in threaded engagement therewith means for fastening cargo to the members (10, 12).

13. A fastener assembly according to claim 10, 11 or 12, wherein said internal drive means (20) in the bolt is in the threaded end thereof and the sealing capped nut (10) is tapped through to allow insertion of a tool therethrough to drive the bolt (12) by means of said internal drive means (20) therein.

14. A fastener assembly according to claim 13, wherein the threaded portion of the bolt (12) has a breakaway portion such that, upon tightening to a predetermined amount, the threaded portion of the bolt (12) breaks away substantially flush with the sealing capped nut (10).

15. A fasterner assembly according to any of claims 10 to 14, wherein the sealing capped nut (10) includes a head having a drill-out dimple centred on the exposed face thereof.

16. A fastener assembly according to claim 15, wherein the nut head has a tightness bulb on the interior thereof for indicating by external visual inspection, the tightness of the engaged bolt (12).

17. A fastener assembly according to any of claims 11 to 16, wherein the length of the broadened shank portion of the bolt (12) plus the thin wall shank portion thereof is greater than the total thickness of the articles (14) to be fastened together.

18. A fastener assembly according to any of claims 10 to 17, wherein the thin wall shank portion has a bellows expander to allow for various thicknesses or articles (14) to be fastened together.

19. A fastener assembly according to any of claims 10 to 18, wherein the bolt (12) is operable to form the hem to include a pair of regularly extending substantially flat layers deformed from the thin wall shank portion.

20. A fastener assembly according to any of claims 10 to 19, wherein the sealing capped nut (10) includes a head having an annular skirt (60) to sealingly engage the periphery of the apertures (18) being sealed.

## Revendications

1. Dispositif de fixation pour assembler et étancher ensemble des objets (14, 16) ayant respectivement des ouvertures (18) l'un à l'autre qui comprend deux éléments (10, 12) ayant des moyens complémentaires correspondants qui, quand les éléments (10, 12) sont assemblés, permettent de solidariser lesdits éléments (10, 12) et qui ont des faces de serrage respectives pouvant coopérer avec les surfaces opposées correspondantes des objets (14, 16) pour s'appliquer et exercer une pression contre celles-ci quand les éléments (10, 12) sont solidarisés par lesdits moyens complémentaires, l'un des éléments (10) ayant un tronc (38) de diamètre réduit qui s'étend des ouvertures (16) de sa face de serrage et qui a une extrémité tubulaire (40), et des moyens d'étanchéité pouvant venir se placer entre la face de serrage de l'autre élément (12) et la surface adjacente des objets (14) afin de produire un joint autour des ouvertures alignées (18) à ladite surface adjacente, quand les éléments (10, 12) sont assemblés et solidarisés par lesdits moyens complémentaires, caractérisé en ce que l'extrémité tubulaire (40) du tronc est en une matière déformable,

en ce que la face de serrage de l'autre élément (12) a des moyens (32) pour former un ourlet quand les éléments (10, 12) sont assemblés, afin de déformer radialement l'extrémité tubulaire (40) du tronc (38), en produisant un ourlet circulaire continu s'étendant radialement qui s'applique contre la surface adjacente des objets (14), autour des ouvertures (18) et qui est serré de manière étanche contre celles-ci par la face de serrage de l'autre élément (12), afin de produire ledit joint, et,

en ce que ledit élément (10) est conçu pour produire un joint avec la surface adjacente correspondante des objets (14) autour des ouvertures (18) et en coopération avec le tronc (38) et l'ourlet, quand il a été formé sur les éléments (10, 12) assemblés, afin d'étancher complètement les ouvertures (18).

2. Dispositif de fixation selon la revendication 1, caractérisé en ce que lesdits moyens complémentaires comprennent des filetages opérant, durant l'assemblage des éléments (10, 12) pour rapprocher les faces de serrage l'une vers l'autre et pour provoquer la formation de l'ourlet par lesdits moyens (32).

3. Dispositif selon la revendication 2, caractérisé en ce que le premier élément (10) est un écrou avec un filetage femelle, tandis que l'autre élément (12) est une vis avec un filetage mâle correspondant à ce filetage femelle.

4. Dispositif de fixation selon la revendication 2, caractérisé en ce que le premier élément (10) est une vis avec un filetage mâle, tandis que le second élément (12) est un écrou avec un filetage femelle.

5. Dispositif de fixation selon la revendication 2, caractérisé en ce que le premier élément (10) est un élément métallique fileté encastré dans une matière polymérique, l'extrémité tubulaire (40) étant constituée par la matière polymérique.
(10) est un élément métallique fileté encastré dans une matière polymérique, l'extrémité tubulaire (40) étant constituée par la matière polymérique.

6. Dispositif de fixation selon l'une quelconque des revendications 2, 3, 4 ou 5, caractérisé en ce que la partie de diamètre réduit (38) du tronc est profilée et dimensionnée pour s'àjuster dans les ouvertures (18) de façon à empêcher le premier élément (10) de tourner quand on visse les éléments (10 et 12) l'un dans l'autre et lorsqu'on fait tourner le second élément (12).

7. Dispositif de fixation selon l'une quelconque des revendications précédentes, caractérisé en ce que les moyens (32) pour former l'ourlet comprennent une cavité dans la face de serrage correspondante venant s'appliquer contre l'extrémité tubulaire (40) en repliant les parties adjacentes de la matière déformable de cette extrémité (40) de façon à produire l'ourlet qui est reçu dans la cavité.

8. Elément de fixation selon l'une quelconque des revendications 1 à 6, caractérisé en ce que les moyens pour former l'ourlet comprennent une cavité annulaire creusée dans la face de serrage du second élément (12), cavité dans laquelle s'engage, pendant l'assemblage desdits éléments, l'extrémité tubulaire (40) et qui déforme ainsi radialement cette extrémité (40) en produisant l'ourlet.

9. Dispositif de fixation selon la revendication 8, caractérisé en ce que le cavité annulaire a un rayon dont les dimensions sont suffisantes pour assurer la formation d'un ourlet roulé.

10. Dispositif de fixation selon la revendication 3 ou selon l'une quelconque des revendications 6 à 9, lorsqu'elles dépendent de la revendication 3, caractérisé en ce que la vis (12), qui constitue le second élément (12) comprend une tête (24) ayant des moyens de rotation internes (20) et une cavité annulaire constituant lesdits moyens de formation d'ourlet (32), l'écrou, qui constitue le premier élément (10), étant un écrou à tête d'étanchéité fait d'une matière polymérique et qui comporte un insert métallique taraudé (46) dans lequel s'engage la vis (12), l'extrémité tubulaire (40) dudit premier élément (10) étant constituée par une paroi relativement mince du tronc tubulaire de l'écrou à tête.

11. Dispositif de fixation selon la revendication 10, caractérisé en ce que le tronc de la vis présente une partie élargie près de sa tête (24), la partie mince du tronc s'appliquant contre cette partie élargie pour former l'ourlet dans la cavité annulaire.

12. Dispositif de fixation selon la revendication 10 ou 11, caractérisé en ce que la vis (12) comporte aussi une partie centrale taraudée (28) pour recevoir par vissage l'extrémité des moyens prévus pour fixer le chargement aux éléments (10, 12).

13. Dispositif de fixation selon l'une quelconque des revendications 10, 11 ou 12, caractérisé en ce que lesdits moyens d'entraînement ou de rotation internes (20) de la vis sont situés dans une extrémité filetée de celle-ci, et en ce que l'écrou à tête d'étanchéité (10) est taraudé pour permettre d'y introduire un outil afin de faire tourner la vis (12) grâce auxdits moyens de rotation internes (20).

14. Dispositif de fixation selon la revendication 13, caractérisé en ce que la partie filetée de la vis (12) présente une partie affaiblie de sorte que lorsqu'on la serre avec une force prédéterminée, la partie filetée de la vis (12) se casse pratiquement dans le plan de l'écrou (10).

15. Dispositif de fixation selon l'une quelconque des revendications 10 à 14, caractérisé en ce que l'écrou d'étanchéité (10) comporte une tête dont la face apparente présente un repère de perçage central.

16. Dispositif de fixation selon la revendication 15, caractérisé en ce que la tête de l'écrou comporte une ampoule intérieure pour indiquer, lorsqu'on l'examine, que là vis (12) est bien serrée.

17. Dispositif de fixation selon l'une quelconque des revendications 11 à 16, caractérisé en ce que la somme des longueurs de la partie élargie du tronc de la vis (12) et de la partie mince de ce tronc est supérieure à l'épaisseur totale des objets (14) devant être assemblés.

18. Dispositif de fixation selon l'une quelconque des revendications 10 à 17, caractérisé en ce que la partie mince du tronc comporte un soufflet qui permet d'assembler des objets (14) ayant diverses épaisseurs.

19. Dispositif de fixation selon l'une quelconque des revendications 10 à 18, caractérisé en ce que la vis (12) est conçue pour former un ourlet comprenant deux couches pratiquement plates s'étendant régulièrement qui résultent de la déformation de la partie mince de la paroi du tronc.

20. Dispositif de fixation selon l'une quelconque des revendications 10 à 19, caractérisé en ce que l'écrou (10) comporte une tête ayant une jupe annulaire (6) pour s'appliquer de manière étanche contre le pourtour des ouvertures (18) devant être étanchées.

**Patentansprüche**

1. Befestigungseinrichtung zum Befestigen und abdichtenden Verbinden von Artikeln (14, 16) mit entsprechenden Öffnungen (18) miteinander, die zwei Teile (10, 12) mit einander entsprechenden ineinanderpassenden Einrichtungen aufweist, welche, wenn die Teile (10, 12) zusammengesetzt sind, die Teile (10, 12) aneinander befestigen und entsprechende Klemmflächen haben, die mit zugeordneten, einander gegenüberliegenden Oberflächen der Artikel (14, 16) zusammenarbeiten, um anzugreifen und dagegen zu klemmen, wenn die Teile (10, 12) von den ineinanderpassenden Einrichtungen zusammengehalten sind, wobei eines (10) der Teile einen Schaft (38) mit verringertem Durchmesser hat, der aus seinen Klemmflächen — Öffnungen (18) ragt und ein rohrförmiges Ende (40) aufweist, und wobei zwischen der Klemmfläche des anderen Teiles (12) und der anliegenden Fläche des Artikels (14) Dichtungsmittel anzuordnen sind, um eine Abdichtung um die miteinander fluchtenden Öffnungen (18) herum an der anliegenden Fläche zu bilden, wenn die Teile (10, 12) zusammengesetzt und mittels der ineinanderpassenden Einrichtungen miteinander verbunden sind, dadurch gekennzeichnet, daß das rohrförmige Ende (40) des Schaftes aus verformbarem Material besteht.

daß die Klemmfläche des anderen (12) Teiles eine einen Saum bildende Einrichtung (32) aufweist, die wirksam wird, wenn die Teile (10, 12) zusammengesetzt sind, um das rohrförmige Ende (40) des Schaftes (38) radial zu verformen und einen sich radial erstreckenden Saum mit ununterbrochenem Umfang zu bilden, der an der angrenzenden Fläche des Artikels (14) um die Öffnungen (18) herum anliegt und in abdichtende Verbindungen mit der Klemmfläche des anderen (12) Teiles geklemmt wird, um die Abdichtung zu bilden, und

daß das eine Teil (10) mit der entsprechenden angrenzenden Fläche des Artikels (14) um die Öffnungen (18) herum und in Zusammenwirken mit dem Schaft (38) und dem Saum eine Abdichtung bildet, wenn es beim Zusammensetzen der Teile (10, 12) geformt wird, um die Öffnungen (18) vollständig abzudichten.

2. Befestigungseinrichtung nach Anspruch 1, dadurch gekennzeichnet, daß die ineinanderpassenden Einrichtungen Gewinde aufweisen, die beim Zusammensetzen der Teile (10, 12) die Klemmflächen gegeneinander bewegen und den Saum mittels der den Saum bildenden Einrichtung (32) bilden.

3. Befestigungseinrichtung nach Anspruch 2, dadurch gekenzeichnet, daß das eine Teil (10) eine Mutter mit Innengewinde und das andere Teil (12) ein Bolzen mit Außengewinde, das in das Innengewinde paßt, ist.

4. Befestigungseinrichtung nach Anspruch 2, dadurch gekennzeichnet, daß das eine Teil (10) ein Bolzen mit Außengewinde und das andere Teil (12) eine Mutter mit Innengewinde ist.

5. Befestigungseinrichtung nach Anspruch 2, dadurch gekennzeichnet, daß das eine Teil (10) ein in polymeres Material eingebettetes, mit Gewinde versehenes Metallteil ist, bei dem das rohrförmige Ende (40) von dem polymeren Material gebildet ist.

6. Befestigungseinrichtung nach Anspruch 2, 3, 4 oder 5, dadurch gekennzeichnet, daß der einen verringerten Durchmesser aufweisende Schaft (38) so geformt und bemessen ist, daß er in die Öffnungen (18) in einer Weise paßt, daß er ein Verdrehen des einen Teiles (10) verhindert, wenn die Tiele (10, 12) zusammengeschraubt sind und das andere Teil (12) gedreht wird.

7. Befestigungseinrichtung nach einem der vorhergehenden Ansprüche, dadurch gekennzeichnet, daß die den Saum bildende Einrichtung (32) eine Ausnehmung in der entsprechenden Klemmfläche zum Erfassen des rohrförmigen Endes (40) und zum Umfalten angrenzender Abschnitte des verformbaren Materials des rohrförmigen Endes (40) aufweist, um den Saum zu bilden, der von der Ausnehmung aufgenommen wird.

8. Befestigungseinrichtung nach einem der Ansprüche 1 bis 6, dadurch gekennzeichnet, daß die den Saum bildende Einrichtung eine ringförmige Ausnehmung in der Klemmfläche des anderen Teiles (12) aufweist, welche beim Zusammenbauen der Teile mit dem rohrförmigen Ende (40) in Eingriff kommt, um das Ende (40) zur Bildung des Saumes radial zu verformen.

9. Befestigungseinrichtung nach Anspruch 8, dadurch gekennzeichnet, daß die ringförmige Ausnehmung einen Radius ausreichender Größe hat, um einen gerollten Saum bilden zu können.

10. Befestigungseinrichtung nach Anspruch 3 oder einem der Ansprüche 6 bis 9, soweit diese auf Anspruch 3 rückbezogen sind, dadurch gekennzeichnet, daß der Bolzen (12), welcher das andere Teil (12) bildet, einen Bolzenkopt (24) mit innerer Treibeinrichtung (20) und einer ringförmigen Ausnehmung, welche die den Saum bildende Einrichtung ist, aufweist, wobei die Mutter, welche das eine Teile (10) bildet, eine abdichtende Hutmutter aus polymerem Material ist und einen metallenen Eingriffseinsatz (46) zum Einschrauben des Bolzens (12) enthält, und daß das rohrförmige Ende (40) des einen Teiles (10) ein dünnwandiger rohrförmiger Schaftabschnitt der abdichtenden Hutmutter ist.

11. Befestigungseinrichtung nach Anspruch 10, dadurch gekennzeichnet, daß der Bolzenschaft nahe dem Bolzenkopf (24) einen erweiterten Abschnitt aufweist und daß der dünnwandige Schaftabschnitt mit dem erweiteretn Abschnitt in Kontakt kommt, um den Saum innerhalb der ringförmigen Ausnehmung zu bilden.

12. Befestigungseinrichtung nach Anspruch 10 oder 11, dadurch gekennzeichnet, daß der Bolzen (12) ein zentrales Sackloch (28) zum Einschrauben von Mitteln zum Befestigen von Lasten an den Teilen (10, 12) enthält.

13. Befestigungseinrichtung nach Anspruch 10, 11 oder 12, dadurch gekennzeichnet, daß die innere Treibeinrichtung (20) im Bolzen sich im Gewindeende desselben befindet und daß die abdichtende Hutmutter (10) durchbohrt ist, um ein Werkzeug durchstecken und den Bolzen (12) mittels der in ihm angeordneten inneren Treibeinrichtung (20) antreiben zu können.

14. Befestigungseinrichtung nach Anspruch 13, dadurch gekennzeichent, daß der Gewindeabschnitt des Bolzens (12) einen Abbrechabschnitt aufweist, so daß beim Festziehenauf einen vorbestimmten Wert der Gewindeabschnitt des Bolzens (12) im wesentlichen bündig mit der abdichtenden Hutmutter (10) wegbricht.

15. Befestigungseinrichtung nach einem der Ansprüche 10 bis 14, dadurch gekennzeichnet, daß die abdichtende Hutmutter (10) einen Kopf aufweist, der eine Ausziehvertiefung in der Mitte ihrer außenliegenden Fläche enthält.

16. Befestigungseinrichtung nach Anspruch 15, dadurch gekennzeichnet, daß der Mutterkopf im Inneren einen Anzug-Anzeiger enthält, um für visuelle Inspektion von außen die Festigkeit anzuzeigen, mit der der eingreifende Bolzen (12) angezogen ist.

17. Befestigungseinrichtung nach einem der Ansprüche 11 bis 16, dadurch gekennzeichnet, daß die Länge des erweiterten Schaftabschnittes des Bolzens (12) plus des Dünnwandigen Schaftabschnittes größer als die gesamte Dicke der aneinander zu befestigenden Artikel (14) ist.

18. Befestigungseinrichtung nach einem der Ansprüche 10 bis 17, dadurch gekennzeichnet, daß der dünnwandige Schaftabschnitt einen Faltenbalgexpander aufweist, um verschiedene Dicken der aneinander zu befestigenden Artikel (14) zu ermöglichen.

19. Befestigungseinrichtung nach einem der Ansprüche 10 bis 18, dadurch gekennzeichnet, daß der Bolzen (12) den Saum mit zwei sich regelmäßig erstreckenden, im wesentlichen flachen Schichten bildet, die aus dem dünnwandigen Schaftabschnitt geformt sind.

20. Befestigungseinrichtung nach einem der Ansprüche 10 bis 19, dadurch gekenzeichnet, daß die abdichtende Hutmutter (10) einen Kopf mit einem ringförmigen Kragen (60) aufweist, der am Umfang der abzudichtenden Öffnungen (18) dichtend anliegt.

FIG. 1

FIG. 2

FIG. 3

FIG. 3a

FIG. 4

FIG. 5

FIG. 6

FIG. 7

FIG. 8

FIG. 9

FIG. 10

FIG. 11

FIG. 12